Europäisches Patentamt

European Patent Office

Office européen des brevets

(11) Veröffentlichungsnummer: **0 259 774**
**A2**

## (12) EUROPÄISCHE PATENTANMELDUNG

(21) Anmeldenummer: 87112819.5

(22) Anmeldetag: 02.09.87

(51) Int. Cl.⁴: **G06F 13/36**

(30) Priorität: **04.09.86 DE 3630207**

(43) Veröffentlichungstag der Anmeldung:
**16.03.88 Patentblatt 88/11**

(84) Benannte Vertragsstaaten:
**AT BE CH DE ES FR GB IT LI NL SE**

(71) Anmelder: **Siemens Aktiengesellschaft Berlin und München**
**Wittelsbacherplatz 2**
**D-8000 München 2(DE)**

(72) Erfinder: **Graf, Robert, Dipl.-Ing.**
**Weissenburger Strasse 30**
**D-8900 Augsburg(DE)**

(54) Verfahren und Schaltungsanordnung der Zugriffsberechtigung an einen von mehreren, zum Bussystem eines Hauptprozessors zugreifenden Nebenprozessoren.

㊼ Die Zustände der Zugriffswunschsignale der jeweiligen Nebenprozessoren werden zu einem ersten Zeitpunkt abgespeichert. Nach Abspeicherung wenigstens eines Zugriffswunschsignales bereitet der Hauptprozessor die Abgabe der Zugriffsberechtigung vor, und eine Auswahllogik wählt einen der beantragenden Nebenprozessoren anhand der abgespeicherten Zugriffswunschsignale aus. Nachdem der Hauptprozessor die Zugriffsberechtigung abgegeben hat, wird diese zu einem zweiten Zeitpunkt an den von der Auswahllogik ausgewählten Nebenprozessor weitergereicht. Ein erneutes Abspeichern der Zustände der Zugriffswunschsignale erfolgt erst nach Rückgabe der Zugriffsberechtigung des ausgewählten Nebenprozessors an den Hauptprozessor.

FIG 1

## Verfahren und Schaltungsanordnung zur Vergabe der Zugriffsberechtigung an einen von mehreren, zum Bussystem eines Hauptprozessors zugreifenden Nebenprozessoren

Die Erfindung betrifft ein Verfahren und eine Schaltungsanordnung zur Vergabe einer Zugriffsberechtigung an einen von mehreren Nebenprozessoren, die auf ein Bussystem eines Hauptprozessors zugreifen und die mit jeweils einem, dem jeweiligen Nebenprozessor zugeordneten Zugriffswunschsignal die Abgabe der Zugriffsberechtigung vom Hauptprozessor veranlassen können.

In vielen Prozessorsystemen ist einem Hauptprozessor ein Nebenprozessor zugeordnet, der für spezielle Aufgaben besonders qualifiziert ist, und diese oft in einem Bruchteil der Zeit erledigen kann, die der Hauptprozessor dafür benötigen würde.

Als einfachste Möglichkeit, ein derartiges Prozessorsystem zu realisieren, ist es bekannt, den Nebenprozessor unmittelbar an das Bussystem des Hauptprozessors anzuschließen, wobei mit Hilfe von Korrespondenzleitungen eine Art Absprache zwischen den beiden Prozessoren erfolgt.

Die meisten als Mikroprozessor realisierten Hauptprozessoren sind zu diesem Zweck mit einem zur Erkennung eines Zugriffswunsches vorgesehenen Eingang und mit einem zugehörigen Quittungsausgang versehen, der als Antwort auf einen erkannten Zugriffswunsch die Abgabe der Zugriffsberechtigung des Hauptprozessors meldet, so daß damit dem Nebenprozessor der Zugriff auf das Bussystem erlaubt wird.

Im Regelfall kann nur der Hauptprozessor zur Abgabe der Zugriffsberechtigung veranlaßt werden. Er bekommt die Zugriffsberechtigung erst wieder zurück, wenn der Nebenprozessor sie von sich aus zurückgibt.

Um die Datenverarbeitungsleistung eines Prozessorsystems zu erhöhen, kann die Verwendung mehrerer Nebenprozessoren erforderlich sein, die, wie oben erwähnt, an das Bussystem des Hauptprozessors angeschlossen sind und um die Zugriffsberechtigung konkurrieren.

Aufgabe der Erfindung ist es, ein Verfahren anzugeben, mit dessen Hilfe die Vergabe der Zugriffsberechtigung an einen der Nebenprozessoren auf möglichst einfache Weise gesteuert werden kann.

Gelöst wird die Aufgabe erfindungsgemäß durch die im kennzeichnenden Teil des Anspruchs 1 angegebenen Merkmale.

Durch die Erfindung wird der Vorteil erzielt, eine eindeutige Vergabe der Zugriffsberechtigung auch bei zugleich auftretenden Zugriffswunschsignalen sicherzustellen, ohne daß dafür ein zusätzlicher Zeitaufwand entsteht. Die Erfindung bietet weiterhin den Vorteil, den Aufwand für eine schaltungstechnische Realisierung gering halten zu können.

Eine vorteilhafte Schaltungsanordnung zur Durchführung des Verfahrens gemäß der Erfindung ist in den Unteransprüchen angegeben.

Diese Schaltungsanordnung ist auf eine beliebige Anzahl von Nebenprozessoren erweiterbar und kann mit Hilfe der Synchronisationskippstufen ohne Anpassung an die zeitlichen Gegebenheiten in einem Prozessorsystem zur Vergabe der Zugriffsberechtigung an die Nebenprozessoren eingesetzt werden.

Ein Ausführungsbeispiel der Erfindung wird im folgenden anhand der Zeichnung näher erläutert.

Dabei zeigen

FIG 1 eine Schaltungsanordnung gemäß der Erfindung mit einem Hauptprozessor und drei Nebenprozessoren,

FIG 2 ein Zeitdiagramm mit den für die Vergabe der Zugriffsberechtigung relevanten Signalen.

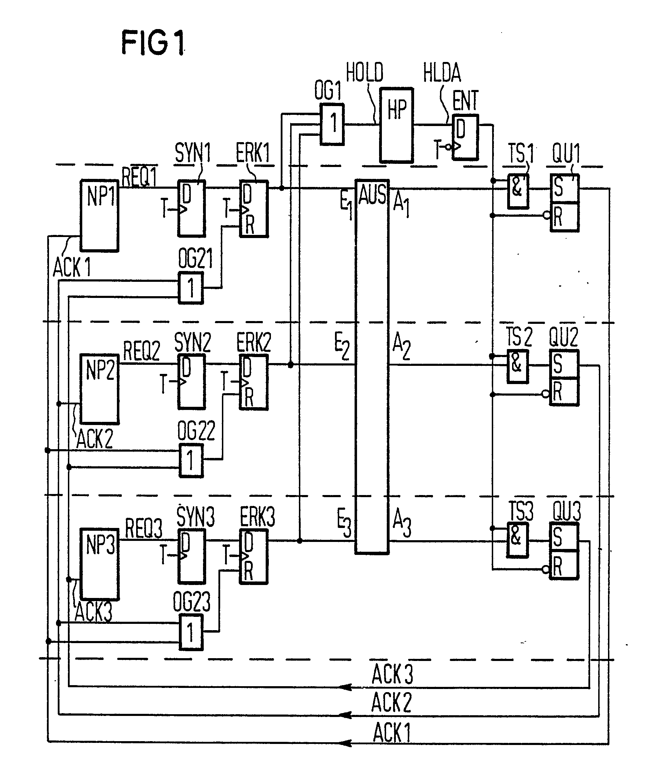

In der FIG 1 sind einem schematisch dargestellten Hauptprozessor HP eingangsseitig ein erstes ODER-Glied OG1 und ausgangsseitig eine Entscheidungskippstufe ENT zugeordnet. Drei ebenfalls schematisch abgebildeten Nebenprozessoren NP1, NP2, NP3 sind jeweils eine Synchronisationskippstufe SYN1, SYN2, SYN3, je eine Erkennungskippstufe ERK1, ERK2, ERK3 mit je einem zweiten ODER-Glied OG21, OG22, OG23, je eine Torschaltung TS1, TS2, TS3 und je eine Quittungskippstufe QU1, QU2, QU3 zugeordnet. Zwischen den jeweiligen Erkennungskippstufen ERK1, ERK2, ERK3 und den jeweils zugehörigen Torschaltungen TS1, TS2, TS3 ist eine Auswahllogik AUS eingeschaltet.

Jeder der drei Nebenprozessoren NP1, NP2, NP3 weist einen Ausgang für ein Zugriffswunschsignal REQ1 bzw. REQ2 und REQ3 und einen Eingang für ein zugehöriges Quittungssignal ACK1 bzw. ACK2 und ACK3 auf.

Das Zugriffswunschsignal REQ1 des ersten Nebenprozessors NP1 ist dem D-Eingang der als D-Flip-Flop ausgeführten, dem ersten Nebenprozessor NP1 zugeordneten Synchronisationskippstufe SYN1 zugeführt. Der Ausgang der Synchronisationskippstufe SYN1 ist mit dem D-Eingang der ebenfalls als D-Flip-Flop ausgeführten, dem ersten Nebenprozessor NP1 zugeordneten Erkennungskippstufe ERK1 verbunden. Der Ausgang dieser Erkennungskippstufe ERK1 ist an den, dem ersten Nebenprozessor NP1 zugeordneten Eingang E1, der allen Nebenprozessoren gemeinsamen Auswahllogik AUS angeschlossen. Der dem ersten Nebenprozessor NP1 zugeordnete Ausgang A1 der Auswahllogik AUS ist mit dem ersten Eingang der dem ersten Nebenprozessor NP1 zugeordneten, beispielsweise als UND-Glied ausgeführten Torschaltung TS1 verbunden. Der Ausgang dieser Torschaltung TS1 ist dem Setzeingang, der dem ersten Nebenprozessor NP1 zugeordneten, als R-S-Kippstufe ausgeführten Quittungskippstufe QU1 zugeführt, deren Ausgang an den für das Quittungssignal ACK1 vorgesehenen Eingang des ersten Nebenprozessors NP1 angeschlossen ist.

Für den zweiten und dritten Nebenprozessor NP2 und NP3 ist jeweils eine zur beschriebenen Anordnung analoge Beschaltung mit den für den jeweiligen zweiten und dritten Nebenprozessor NP2 und NP3 zugeordneten Elementen vorgesehen.

Die Ausgänge der drei Erkennungskippstufen ERK1, ERK2, ERK3 sind an die Eingänge des ersten ODER-Gliedes OG1 geführt, dessen Ausgang mit dem für die Erkennung eines Zugriffswunsches seitens eines Nebenprozessors vorgesehenen Eingang HOLD des Hauptprozessors HP verbunden ist. Das Quittungssignal HLDA des Hauptprozessors HP ist auf den D-Eingang der als D-Flip-Flop ausgeführten Entscheidungskippstufe ENT geführt. Der Ausgang der Entscheidungskippstufe ENT ist sowohl mit den invertierenden Rücksetzeingängen aller Quittungskippstufen QU1, QU2, QU3, als auch mit den den Freigabeeingängen aller Torschaltungen TS1, TS2, TS3 verbunden.

Die Quittungskippstufen QU1, QU2, QU3 könnten z.B. auch als D-Flip-Flops mit asynchronem Setzeingang ausgeführt sein, wobei dann der Ausgang der zugehörigen Torschaltung TS mit dem Setzeingang und der Ausgang der Entscheidungskippstufe ENT mit dem invertierenden Takteingang der Quittungskippstufe QU verbunden ist, an deren D-Eingang ein konstante logischer L-Pegel anliegt.

Sobald, wie im Ausführungsbeispiel gezeigt, mehr als zwei Nebenprozessoren vorhanden sind, ist jedem Nebenprozessor NP ein jeweiliges zweites ODER-Glied OG2 zugeordnet, das ausgangsseitig mit dem Rücksetzeingang der, dem jeweiligen Nebenprozessor zugeordneten Erkennungskippstufe ERK verbunden ist, und dem eingangsseitig die zugehörigen Quittungssignale ACK für die jeweiligen anderen Nebenprozessoren zugeführt sind. So sind im Ausführungsbeispiel an das dem ersten Nebenprozessor NP1 zugeordnete zweite ODER-Glied OG21 die Quittungssignale ACK2 und ACK3 für den zweiten und dritten Nebenprozessor NP2 und NP3, an das dem zweiten Nebenprozessor NP2 zugeordnete zweite ODER-Glied OG22 die Quittungssignale ACK1 und ACK3 für den ersten und dritten Nebenprozessor NP1 und NP3 und an das dem dritten Nebenprozessor NP3 zugeordnete zweite ODER-Glied OG23 die Quittungssignale ACK1 und ACK2 für den ersten und zweiten Nebenprozessor NP1 und NP2 geführt. Falls nur zwei Nebenprozessoren in einem Prozessorsystem vorhanden sind, entfallen die zweiten ODER-Glieder.

Ein periodisches Taktsignal T, das z.B. das Taktsignal des Hauptprozessors HP sein kann, ist den Takteingängen aller Synchronisations-und Erkennungskippstufen und dem invertierenden Takteingang der Entscheidungskippstufe ENT zugeführt.

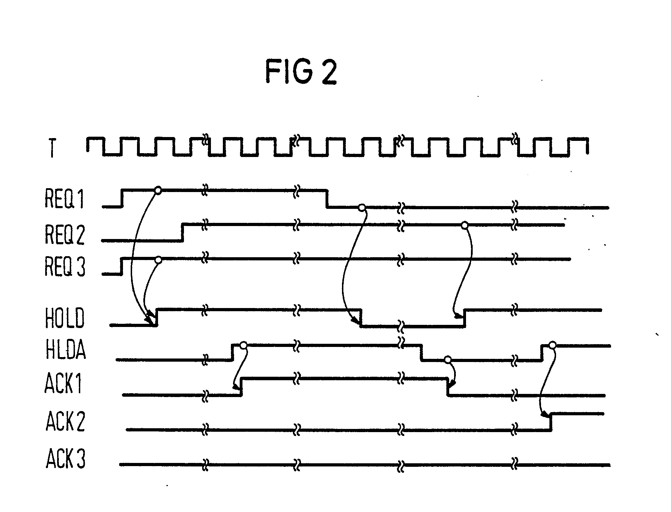

In FIG 2 ist der jeweils zeitliche Verlauf für die den Nebenprozessoren NP1, NP2, NP3 zugeordneten Zugriffswunschsignale REQ1, REQ2, REQ3, für die zugehörigen Quittungssignale ACK1, ACK2, ACK3, für das an dem für die Erkennung eines Zugriffswunsches seitens eines Nebenprozessors vorgesehenen Eingang HOLD des Hauptprozessors HP anliegende Signal und für das Quittungssignal HLDA des Hauptprozessors HP dargestellt.

Bevor anhand der FIG 2 die Funktion erläutert wird, ist vorausschickend zu erwähnen, daß eine taktflankengesteuerte Kippstufe im Falle eines Pegelwechsels an einem synchronen Eingang und dem einem gleichzeitigen schaltenden Pegelwechsel am Takteingang (asynchrones Einphasen) einen metastabilen Zustand einnimmt, der für geraume Zeit ein schwingendes Ausgangssignal zur Folge hat.

Ohne Synchronisationskippstufen SYN1, SYN2, SYN3 bestünde, wenn die Nebenprozessoren NP1, NP2, NP3 ihr zugehöriges Zugriffswunschsignal REQ1, REQ2, REQ3 zu einem beliebigen Zeitpunkt aktivieren oder deaktivieren können, die Gefahr, daß eine Erkennungskippstufe ERK in einen metastabilen Zustand gerät. Zum einen kann sich dann über das erste ODER-Glied OG1 an dem für die Erkennung eines Zugriffswunsches seitens eines Nebenprozessors vorgesehenen Eingang HOLD des Hauptprozessors HP ein instabiles Signal einstellen, das zu Fehlfunktionen des Hauptprozessors HP führen kann, zum anderen kann die Auswahllogik AUS an ihren Ausgängen A1, A2 und A3 keinen definierten Zustand liefern, wodurch nach Öffnen der Torschaltungen TS1, TS2, TS3 mehrere Quittungskippstufen QU1, QU2, QU3 gesetzt werden könnten, und die Schaltung somit ihre Aufgabe verfehlen würde.

Die Synchronisationskippstufen SYN1, SYN2, SYN3 sind vorzugsweise schnelle Kippstufen, die während einer Periodendauer des periodischen Taktsignals T einen eingetretenen metastabilen Zustand beenden können. Da die Erkennungskippstufen ERK1, ERK2, ERK3, wie die Synchronisationskippstufen SYN1, SYN2, SYN3 mit einer steigenden Flanke des periodischen Taktsignals T - schalten, ist somit sichergestellt, daß die Erkennungskippstufen ERK1, ERK2, ERK3 keinen metastabilen Zustand einnehmen können. Bei geringer Frequenz des periodischen Taktsignals T oder sehr schnellen Synchronisationskippstufen wäre es auch denkbar, die Synchronisationskippstufen mit einem invertierendem Takteingang zu versehen und sie somit von einer fallenden Flanke des periodischen Taktsignals T schalten zu lassen.

Mit einer steigenden Flanke des periodischen Taktsignals T wird das von der jeweils zugeordneten Synchronisationskippstufe SYN weitergegebene Zugriffswunschsignal in die zugeordnete Erkennungskippstufe ERK übernommen. Das erste ODER-Glied OG1 aktiviert, sobald wenigstens eine Erkennungskippstufe ERK gesetzt ist, den für die Erkennung eines Zugriffswunsches seitens eines Nebenprozessors NP vorgesehenen Eingang HOLD des Hauptprozessors HP. Nach einer vom Hauptprozessor HP festgelegten Zeitdauer aktiviert dieser sein Quittungssignal HLDA und gibt damit seine Zugriffsberechtigung ab. Die Entscheidungskippstufe ENT übernimmt daraufhin mit einer fallenden Flanke des periodischen Taktsignals T das Quittungssignal HLDA des Hauptprozessors HP und öffnet mit ihrem Ausgangssignal alle Torschaltungen TS1, TS2, TS3.

Die Auswahllogik, die abhängig von ihrer internen Beschaltung und vom Zustand der drei Eingänge E1, E2, E3 genau einen der drei Ausgänge A1, A2, A3 aktiviert, muß vor dem Zeitpunkt des Toröffnens einen definierten Zustand ihrer Ausgänge erreicht haben. Bei dem in der FIG 2 gezeigten Beispiel hat die Auswahllogik AUS den Zugriffswunsch REQ1 des ersten Nebenprozessors NP1 ausgewählt, denn nach dem Öffnen der Torschaltungen TS1, TS2, TS3 nach einer fallenden Flanke des periodischen Taktsignals T wird die dem ersten Nebenprozessor NP1 zugeordnete Quittungskippstufe QU1 gesetzt, die das zugehörige Quittungssignal ACK1 aktiviert. Dem ersten Nebenprozessor NP1 ist damit die Zugriffsberechtigung übergeben worden.

Damit die Erkennungskippstufen ERK1, ERK2, ERK3 mit der nächsten steigenden Flanke des periodischen Taktsignals T nicht weiter Zugriffswunschsignale abspeichern, die die Auswahllogik AUS zum Umschalten ihrer Ausgänge A1, A2, A3 veranlassen könnte, werden diejenigen Erkennungskippstufen ERK1, ERK2, ERK3 mit einem Rücksetzsignal beaufschlagt, die nicht dem jeweiligen, die Zugriffsberechtigung innehabenden Nebenprozessor zugeordnet sind. Am ersten ODER-Glied OG1 bleibt somit nur ein Eingang aktiv.

Ein Nebenprozessor NP gibt die Zugriffsberechtigung ab, indem er sein Zugriffswunschsignal REQ deaktiviert. FIG 2 zeigt, wie das deaktivierte dem ersten Nebenprozessor NP1 zugeordnete Zugriffswunschsignal REQ1 zu einer Deaktivierung des für die Erkennung eines Zugriffswunsches seitens eines Nebenprozessors vorgesehenen Eingang HOLD des Hauptprozessors HP führt. Der Hauptprozessor HP beantwortet dies nach einer gewissen Zeit mit der Deaktivierung seines Quittungssignales HLDA, womit er die Zugriffsberechtigung wieder an sich nimmt. Die Entscheidungskippstufe ENT gibt das deaktivierte Quittungssignal HLDA des Hauptprozessors mit der nächsten fallenden Flanke des periodischen Taktsignals T weiter. Damit werden alle Torschaltungen TS1, TS2, TS3 geschlossen und die gesetzte Quittungskippstufe QU (im Beispiel QU1) wieder zurückgesetzt, wodurch auch die rückgesetzten Erkennungskippstufen (im Beispiel ERK2, ERK3) wieder freigegeben werden. Mit der nächsten steigenden Flanke des periodischen Taktsignals T können die Erkennungskippstufen ERK1, ERK2, ERK3 erneut einen Zugriffswunsch abspeichern.

**Ansprüche**

1. Verfahren zur Vergabe einer Zugriffsberechtigung an einen von mehreren Nebenprozessoren, die auf ein Bussystem eines Hauptprozessors zugreifen und die mit jeweils einem, dem jeweiligen Nebenprozessor zugeordneten Zugriffswunschsignal den Hauptprozessor zur Abgabe der Zugriffsberechtigung veranlassen können, **dadurch gekennzeichnet,** daß zu einem ersten Zeitpunkt die Zustände der Zugriffswunschsignale der jeweiligen Nebenprozessoren abgespeichert werden, daß nach Abspeicherung wenigstens eines Zugriffswunschsignales der Hauptprozessor die Abgabe der Zugriffsberechtigung vorbereitet und eine Auswahllogik einen der beantragenden Nebenprozessoren anhand der abgespeicherten Zugriffswunschsignale auswählt, daß, nachdem der Hauptprozessor die Zugriffsberechtigung abgegeben hat, diese zu einem zweiten Zeitpunkt an den von der Auswahllogik ausgewählten Nebenprozessor weitergereicht wird und daß ein erneutes Abspeichern der Zustände der Zugriffswunschsignale erst nach Rückgabe der Zugriffsberechtigung des ausgewählten Nebenprozessors an den Hauptprozessor erfolgt.

2. Schaltungsanordnung zur Durchführung des Verfahrens nach Anspruch 1, **dadurch gekennzeichnet,** daß jedem Nebenprozessor (NP) eine taktflankengesteuerte Erkennungskippstufe (ERK) mit einem asynchronen Rücksetzeingang zugeordnet ist, deren synchroner Eingang mit dem von dem Zugriffswunschsignal (REQ) beaufschlagten Ausgang des zugehörigen Nebenprozessors (NP) verbunden ist, daß die ·Ausgänge der Erkennungskippstufen (ERK1, ERK2, ERK3) an die Eingänge eines ersten ODER-Gliedes (OG1) angeschlossen sind, dessen Ausgang mit dem für die Erkennung eines Zugriffswunsches seitens eines Nebenprozessors vorgesehenen Eingang (HOLD) des Hauptprozessors (HP) verbunden ist,

daß der Ausgang jeder Erkennungskippstufe (ERK) an den dem jeweiligen Nebenprozessor (NP) zugeordneten Eingang (E) einer Auswahllogik (AUS) angeschlossen ist, deren den Nebenprozessoren (NP1, NP2, NP3) zugeordnete Ausgänge (A1, A2, A3) jeweils über eine Torschaltung (TS) mit dem Setzeingang einer dem jeweiligen Nebenprozessor (NP) zugeordneten bistabilen Quittungskippstufe (QU) verbunden sind,

daß die Ausgänge der Quittungskippstufen (QU1, QU2, QU3) an den für die Erkennung eines zugehörigen Quittungssignals (ACK) vorgesehenen Eingang des jeweiligen Nebenprozessors (NP) angeschlossen sind,

daß der asynchrone Rücksetzeingang der jeweils einem Nebenprozessor (NP) zugeordneten Erkennungskippstufe (ERK) an den Ausgang· je eines zweiten ODER-Gliedes (OG2) angeschlossen ist, dessen Eingänge mit den Ausgängen der den jeweils anderen Nebenprozessoren zugeordneten Quittungskippstufen verbunden sind,

daß eine taktflankengesteuerte Entscheidungskippstufe (ENT) vorgesehen ist, deren synchroner Eingang mit dem von dem Quittungssignal (HLDA) des Hauptprozessors (HP) beaufschlagten Ausgang des Hauptprozessors (HP) verbunden ist und deren Ausgang an die Freigabeeingänge aller Torschaltungen (TS1, TS2, TS3) und an die invertierenden Rücksetzeingänge aller Quittungskippstufen (QU1, QU2, QU3) angeschlossen ist,

und daß die Erkennungskippstufen (ERK1, ERK2, ERK3) mit der ersten Flanke eines periodischen Taktsignals (T) und die Entscheidungskippstufe (ENT) mit der zweiten Flanke desselben periodischen Taktsignales (T) angesteuert sind.

3. Schaltungsanordnung nach Anspruch 2, **dadurch gekennzeichnet,** daß jeder Erkennungskippstufe (ERK) jeweils eine taktflankengesteuerte Synchronisationskippstufe (SYN) vorgeschaltet ist, deren Eingang mit dem vom Zugriffswunschsignal (REQ) beaufschlagten Ausgang des zugehörigen Nebenprozessors (NP) verbunden ist, und deren Ausgang an den synchronen Eingang der zugehörigen Erkennungskippstufe (ERK) angeschlossen ist und

daß die Synchronisationskippstufen (SYN1, SYN2, SYN3) an ihrem jeweiligen Takteingang mit dem periodischen Taktsignal (T) der Erkennungskippstufen (ERK1, ERK2, ERK3) beaufschlagt sind.

# FIG 1

# FIG 2